# EUROPÄISCHE PATENTANMELDUNG

(11) **EP 2 818 644 A1**
(43) Veröffentlichungstag der Anmeldung: **31.12.2014**
(21) Anmeldenummer: 14172251.2
(22) Anmeldetag: 13.06.2014
(51) Int. Cl.: F01D 11/00, F16J 15/44

(54) **Dichtanordnung für eine Leitschaufelanordnung einer Strömungsmaschine**

(30) Priorität: 27.06.2013 DE 102013212465
(71) Anmelder: MTU Aero Engines AG, 80995 München (DE)
(72) Erfinder: Feldmann, Manfred, 82223 Eichenau (DE); Dusel, Karl-Heinz, 85716 Unterschleißheim (DE)

(57) **Zusammenfassung**

Die Erfindung betrifft eine Dichtanordnung (15), eine Leitschaufelanordnung und eine Strömungsmaschine (11) mit einer derartigen Dichtanordnung 15, wobei die Dichtanordnung radial innenseitig an einem Leitschaufelkranz (60) der Strömungsmaschine angeordnet ist, wobei die Dichtanordnung eine dünnwandige, weitgehend allseitig geschlossene Ringstruktur (80) umfasst, und wobei die Ringstruktur einen Ringinnenraum (105) begrenzt, wobei in dem Ringinnenraum eine Hohlkammerstruktur (109) vorgesehen ist, die ausgebildet ist, die Ringstruktur mechanisch zu stützen.

## Beschreibung

Die Erfindung betrifft eine Dichtanordnung für eine Strömungsmaschine, eine Leitschaufelanordnung und eine Strömungsmaschine mit einer derartigen Dichtanordnung, die eine dünnwandige, weitgehend allseitig geschlossene Ringstruktur umfasst, und wobei die Ringstruktur einen Ringinnenraum begrenzt.

Aus der DE 10 2006 004 090 A1 ist ein Dichtanordnung einer Gasturbine mit einer Leitschaufel und einem am radial innen liegenden Ende der Leitschaufel angeordneten Innendeckband bekannt, wobei integraler Bestandteil des Innendeckbands ein Dichtungselement ist, welches der Abdichtung eines radial innen liegenden Spalts zwischen dem Dichtanordnung und dem Gasturbinenrotor dient.

Ferner ist bekannt, dass Dichtanordnungen an Leitschaufeln zumindest teilweise ringförmig ausgebildet werden können und eine dünnwandige Ringstruktur umfassen, um einen Gasstrom durch verschiedene Spalten im Bereich der Dichtanordnung zu reduzieren. Dabei begrenzt die Ringstruktur einen Ringinnenraum. Üblicherweise müssen diese Ausgestaltungen aus mehreren Teilen zusammengesetzt und montiert werden. Auch kann das im Ringinnenraum vorhandene Gas durch eine Bewegung der Ringstruktur zu einer Wirbelbildung angeregt werden, die zusätzliche Reibung in der Gasturbine hervorruft.

Es ist Aufgabe der Erfindung, eine verbesserte Dichtanordnung für eine Strömungsmaschine, eine Leitschaufelanordnung und eine Strömungsmaschine mit solch einer Dichtanordnung bereitzustellen.

Diese Aufgabe wird mittels einer Dichtanordnung mit den Merkmalen des Anspruchs 1 gelöst. Vorteilhafte Ausführungsformen sind in den abhängigen Ansprüchen angegeben.

Erfindungsgemäß wurde erkannt, dass eine verbesserte Dichtanordnung dadurch bereitgestellt werden kann, dass die Dichtanordnung eine dünnwandige, weitgehend allseitig geschlossene Ringstruktur umfasst, und wobei die Ringstruktur einen Ringinnenraum begrenzt. Ferner ist in dem Ringinnenraum eine Hohlkammerstruktur vorgesehen ist, die ausgebildet ist, die Ringstruktur mechanisch zu stützen.

Auf diese Weise wird gewährleistet, dass innerhalb des Ringinnenraums eine Wirbelbildung durch ein dort vorhandenes Gas vermieden wird. Ferner stützt die Hohlkammerstruktur die Ringstruktur innenseitig ab, so dass die Ringstruktur besonders dünnwandig ausgebildet werden kann und insgesamt ein Gewicht der Dichtanordnung reduziert ist.

Als besonders vorteilhaft hat sich herausgestellt, wenn die Hohlkammerstruktur eine Schaumstruktur, vorzugsweise einen offenporigen Schaum, insbesondere vorzugsweise einen offenporigen Metallschaum, als Werkstoff umfasst. Die Offenporigkeit des Schaums hat den Vorteil, dass bei einer Erwärmung der Dichtanordnung, die üblicherweise bis auf 600 °C erfolgen kann, ein Druckausgleich innerhalb des Schaums zwischen den Poren des Schaums eintritt. Auf diese Weise wird vermieden, dass bei einer Erwärmung der Dichtanordnung der Schaum unnötig hohen Materialbelastungen durch eine Ausdehnung des im Schaum vorhandenen Gases ausgesetzt ist.

In einer weiteren Ausführungsform umfasst die Hohlkammerstruktur eine Tragestruktur, wobei die Tragestruktur wabenförmig ausgebildet ist. Dies Ausgestaltung der Dichtanordnung ist in eine Richtung besonders steift.

In einer weiteren Ausführungsform umfasst die Hohlkammerstruktur wenigstens zwei Stege und wenigstens drei Knotenpunkte, wobei die Stege an den Knotenpunkten mit der Ringstruktur und/oder die Stege untereinander zu einem Fachwerk verknüpft sind. Diese Ausgestaltung ermöglicht eine besonders einfache und belastungsgerechte Ausgestaltung der Dichtanordnung.

In einer weiteren Ausführungsform weist die Ringstruktur wenigstens eine Durchgangsöffnung auf, die den Ringinnenraum mit einer Umgebung der Dichtanordnung verbindet, wobei die wenigstens eine Durchgangsöffnung zum Druckausgleich des Ringinnenraums mit einer Umgebung ausgebildet ist. Wird der Leitschaufelkranz, wie oben erläutert, erwärmt, so strömt das in den Poren der Hohlkammerstruktur vorhandene Gas in die Hohlkammerstruktur und schlussendlich durch die Durchgangsöffnung, so dass das in der Hohlkammerstruktur enthaltene Gas aus dem Ringinnenraum zuverlässig ausgeleitet werden kann und somit eine mögliche Zerstörung der Ringstruktur durch einen Überdruck im Schaum vermieden werden kann.

In einer weiteren Ausführungsform ist eine weitere Durchgangsöffnung zum Druckausgleich des Ringinnenraums vorgesehen, wobei die Durchgangsöffnung und die weitere Durchgangsöffnung auf der gleichen Seite der Ringstruktur angeordnet sind. Auf diese Weise wird vermieden, dass ein Gasstrom durch die beiden Durchgangsöffnungen und die dazwischen angeordnete Schaumstruktur erfolgt.

In einer weiteren Ausführungsform umfasst die Ringstruktur an einer äußeren Umfangsfläche wenigstens eine Aufnahme, die ausgebildet ist, wenigstens einen Ring des Leitschaufelkranzes aufzunehmen. Auf diese Weise kann die Dichtanordnung einfach an dem Leitschaufelkranz befestigt werden.

In einer weiteren Ausführungsform weist die Aufnahme eine erste stromaufwärtsseitig angeordnete Anlagefläche und eine stromabwärtsseitig angeordnete zweite Anlagefläche auf, wobei die Ringstruktur an der ersten Anlagefläche eine erste Wandstärke und an der zweiten Anlagefläche eine zweite Wandstärke aufweist, wobei die erste Wandstärke von der zweiten Wandstärke abweicht. Auf diese Weise kann die auf die Ringstruktur wirkende Kraft resultierend durch den beispielsweise stromaufwärtsseitig höher anliegenden ersten Druck gegenüber einem zweiten an der stromabwärtsseitigen Seite der Ringstruktur anliegenden Druck zuverlässig in die Ringstruktur über die erste Anlagefläche abgeleitet werden. Gleichzeitig kann die Dichtanordnung besonders leicht ausgebildet werden. So kann bei einer Turbine die erste Wandstärke dicker als die zweite Wandstärke und bei einem Verdichter die zweite Wandstärke dicker als die erste Wandstärke ausgebildet sein, um eine belastungsgerechte Dichtanordnung bereitzustellen.

Besonders vorteilhaft ist, wenn radial innen liegend an der Ringstruktur eine Dichtstruktur vorgesehen ist, die vorzugsweise wabenförmig oder schaumartig ausgebildet ist, wobei die Hohlkammerstruktur eine erste mittlere Porengröße und die Dichtstruktur eine zweite mittlere Porengröße umfasst, wobei die erste mittlere Porengröße der Hohlkammerstruktur kleiner als die zweite mittlere Porengröße der Dichtstruktur ist.

In einer weiteren Ausführungsform ist die Ringstruktur und die Hohlkammerstruktur und vorzugsweise die Dichtstruktur einstückig und materialeinheitlich ausgebildet. Auf diese Weise kann eine besonders steife Dichtanordnung bereitgestellt werden.

In einer weiteren Ausführungsform sind wenigstens die Ringstruktur und die Hohlkammerstruktur und vorteilhafterweise die Dichtstruktur mittels eines Laserpulverauftragsschweissprozesses oder mittels eines selektiven Laserschmelzprozesses oder mittels eines selektiven Lasersinterprozesses gemeinsam hergestellt sind. Jeder der genannten Prozesse ermöglicht eine besonders feine und präzise definierte Herstellung der Hohlkammerstruktur bei gleichzeitiger Anbindung an die Ringstruktur, so dass einzelne Wände der Hohlkammerstruktur direkt in die Ringstruktur übergehen und somit eine besonders steife Dichtanordnung bereitgestellt werden kann. Ferner können Schwankungen in der Herstellung der Hohlkammerstruktur beispielsweise bei einem herkömmlichen Aufschäumen des Schaumwerkstoffes zuverlässig vermieden werden, da mittels des selektiven Laserschmelzprozesses oder des selektiven Lasersinterprozesses oder des Laserpulverauftragsschweißprozesses jede einzelne Pore bzw. Zelle der Hohlkammerstruktur und auch der Ringstruktur definiert festgelegt werden kann.

Als besonders vorteilhaft hat sich auch herausgestellt, wenn die Hohlkammerstruktur und die Ringstruktur einen im Wesentlichen identischen Werkstoff aufweisen, wobei der Werkstoff wenigstens einen der folgenden Bestandteile umfasst: Stahl, Aluminium, Keramik, Titan, Nickel, Kobalt.

Die Erfindung wird aber auch durch eine Leitschaufelanordnung mit den Merkmalen des Anspruchs 13 gelöst.

Erfindungsgemäß wurde erkannt, dass eine verbesserte Leitschaufelanordnung dadurch bereitgestellt werden kann, dass die Leitschaufelanordnung einen Leitschaufelkranz und eine Dichtanordnung umfasst, wobei die Dichtanordnung radial außenseitig und/oder radial innenseitig an dem Leitschaufelkranz angeordnet ist, wobei die Dichtanordnung wie oben erläutert ausgebildet ist.

Auf diese Weise kann ein Verlustgasstrom seitlich an dem Leitschaufelkranz vorbei, ohne den Leitschaufelkranz zu passieren, reduziert werden, so dass ein durch den Leitschaufelkranz umgelenkter Gasstrom vergrößert werden kann.

Die Erfindung wird aber auch durch eine Strömungsmaschine mit den Merkmalen des Anspruchs 14 gelöst.

Erfindungsgemäß wurde erkannt, dass eine verbesserte Strömungsmaschine dadurch bereitgestellt werden kann, dass die Strömungsmaschine wenigstens ein drehbar angeordnetes Laufrad und wenigstens ein Leitrad umfasst, wobei das Laufrad wenigstens eine Laufschaufel und das Leitrad wenigstens einen Leitschaufelkranz umfasst, wobei der wenigstens einen Laufschaufel der wenigstens eine Leitschaufelkranz zugeordnet ist, und wobei an dem wenigstens einen Leitschaufelkranz radial außenseitig und/oder innenseitig wenigstens eine Dichtanordnung vorgesehen ist, wobei die Dichtanordnung wie oben erläutert ausgebildet ist.

Nachfolgend wird die Erfindung anhand von Figuren näher erläutert. Dabei zeigen:
Fig. 1 einen Längsschnitt durch eine Turbine einer Gasturbine;
Fig. 2 einen Ausschnitt des in Fig. 1 gezeigten Längsschnitts mit einer Dichtanordnung;
Fig. 3 einen Längsschnitt durch die in Fig. 2 gezeigte Dichtanordnung;
Fig. 4 einen Ausschnitt eines Querschnitts durch die in Fig. 3 gezeigte Dichtanordnung;
Fig. 5 einen Längsschnitt durch eine Variante der in Fig. 2 gezeigten Dichtanordnungen;
Fig. 6 einen Längsschnitt durch eine weitere Ausführungsform der in Fig. 2 gezeigten Dichtanordnung; und
Fig. 7 einen Längsschnitt durch eine weitere Ausführungsform der in Fig. 2 gezeigten Dichtanordnung.

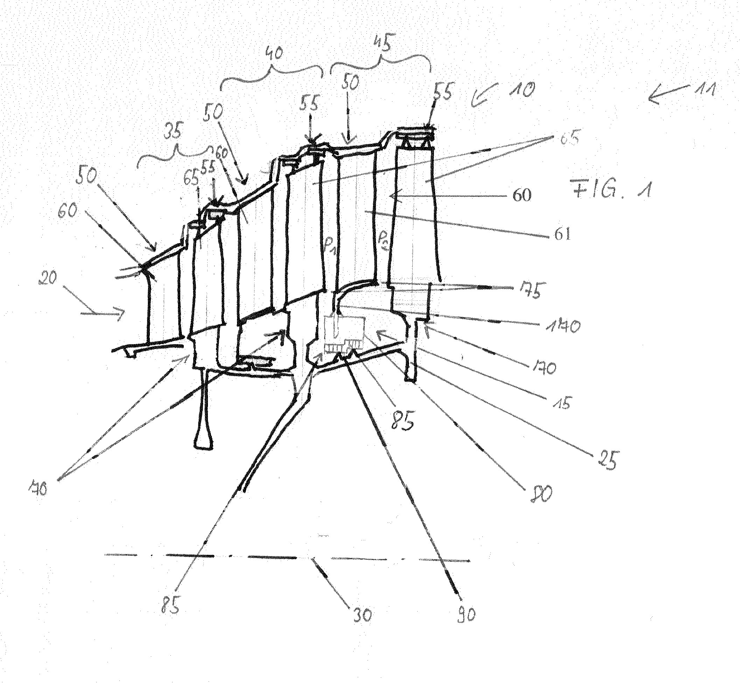

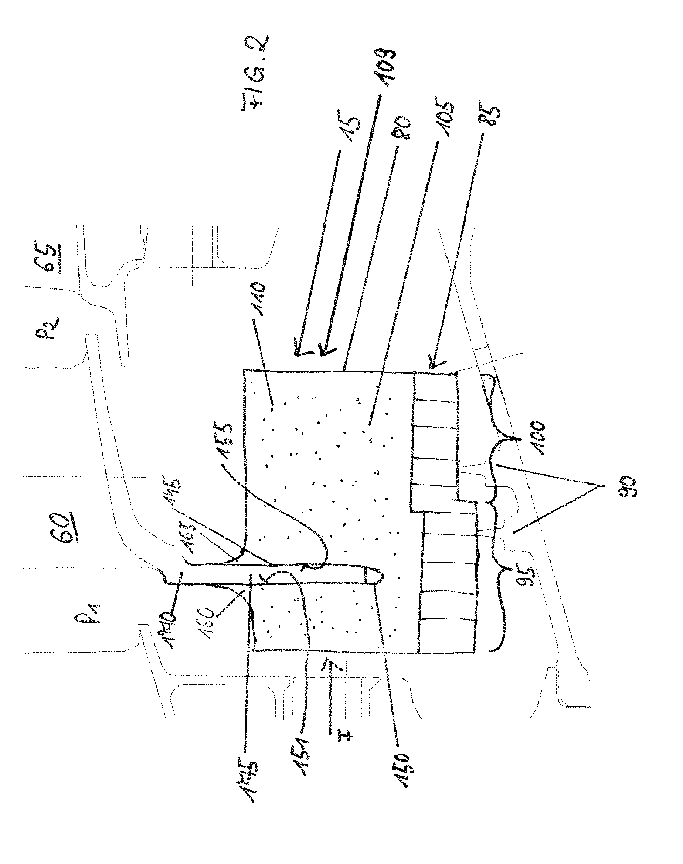

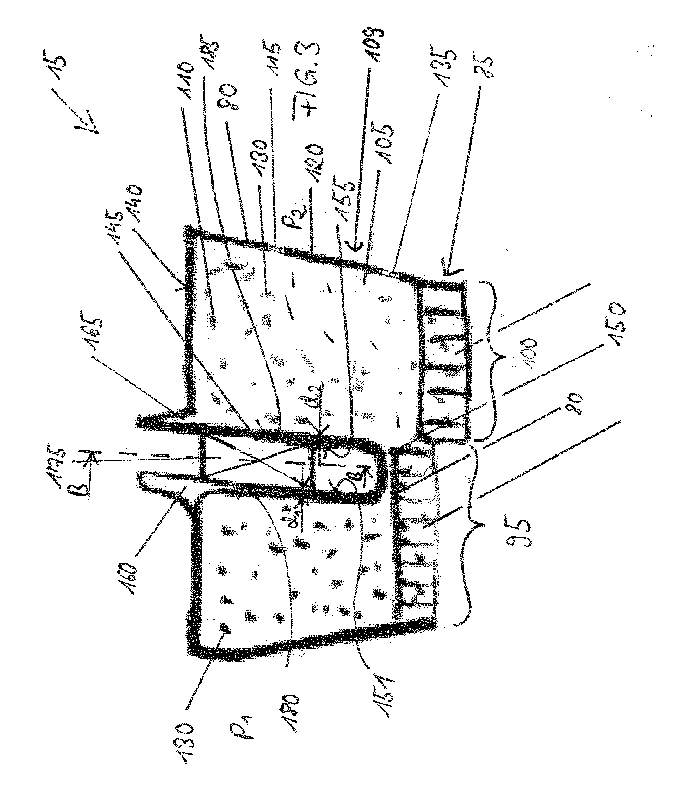

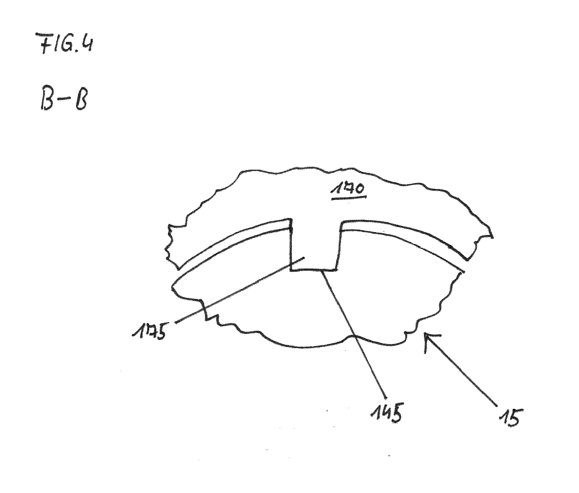

Fig. 1 zeigt einen Längsschnitt durch eine Turbine 10 und Fig. 2 zeigt einen Ausschnitt des in Fig. 1 gezeigten Längsschnitts durch die Turbine 10 mit einer Dichtanordnung 15. Fig. 3 zeigt einen Längsschnitt durch die in Fig. 2 gezeigte Dichtanordnung 15. Fig. 4 zeigt einen Ausschnitt eines Querschnitts durch die in Fig. 3 gezeigte Dichtanordnung 15 entlang einer in Fig. 3 gezeigten Schnittebene B-B. Nachfolgend werden gleiche Bauteile mit gleichen Bezugszeichen benannt. Ferner sollen die Figuren 1 bis 4 zum erleichterten Verständnis gemeinsam erläutert werden.

Die Turbine 10 einer Fluggasturbine 11 wird als Strömungsmaschine von einem Abgasstrom 20 aus einer nicht dargestellten Brennkammer kommend in Fig. 1 und 2 von links nach rechts durchströmt. Dabei umfasst die Turbine 10 eine Trommel 25, die drehbar um eine Drehachse 30 gelagert ist. Die Turbine 10 umfasst mehrere Stufen 35, 40, 45, wobei für jede Stufe 35, 40, 45 jeweils ein Leitrad 50 vor einem Laufrad 55 angeordnet ist. Jedes Leitrad 50 umfasst wenigstens einen Leitschaufelkranz 60 mit wenigstens einer Leitschaufel 61, die ausgebildet ist, den Abgasstrom 20 in Umfangsrichtung abzulenken. Das Laufrad 55 umfasst wenigstens eine radial außenseitig an der Trommel 25 angeordnete Laufschaufel 65. Die Laufschaufel 65 wird durch den Abgasstrom 20 angetrieben, so dass die Trommel 25 in Rotation versetzt wird. Radial innenseitig ist die Laufschaufel 65 über einen Schaufelfuß 70 mit der Trommel 25 verbunden. Um ein Anschlagen der im Betrieb der Turbine 10 radial umlaufenden Laufschaufel 65 an dem Leitschaufelkranz 60 zu vermeiden, ist die Laufschaufel 65 zu dem Leitschaufelkranz 60 über einen Spalt 75 beabstandet angeordnet. Vor dem Leitrad 50 liegt üblicherweise ein erster Druck p₁ an. Nach dem Leitrad 50 auf einer stromabwärtsseitigen Seite des Leitrads 50 liegt ein zweiter Druck p₂ an. Der erste Druck p₁ ist dabei größer als der zweite Druck p₂. Um einen Druckausgleich radial innenseitig an dem Leitrad 50 zu unterbinden, weist das Leitrad 50 bzw. der Leitschaufelkranz 60 die radial innenseitig zur Leitschaufel 61 angeordnete Dichtanordnung 15 auf.

Die Dichtanordnung 15 umfasst eine Ringstruktur 80, die einen rechteckförmigen, vorzugsweise einen trapezförmigen Querschnitt aufweist. Es sind jedoch auch weitere andersartig ausgebildete Querschnittsformen denkbar. Radial innenseitig ist an der Ringstruktur 80 eine Dichtstruktur 85 vorgesehen, in die Dichtelemente 90, die an der Trommel 25 angeordnet sind, eingreifen. Die Dichtstruktur 85 verhindert zusammen mit den Dichtelementen 90 eine Verlustströmung des Abgasstroms 20 bedingt durch die Druckdifferenz zwischen dem ersten Druck p₁ und dem zweiten Druck p₂ axial zwischen der Dichtanordnung 15 und der Trommel 25. Die Dichtstruktur 85 umfasst dabei vorzugsweise eine wabenförmige Struktur oder eine schaumartig ausgebildete Struktur. Dabei weist die Dichtstruktur 85 einen ersten stromaufwärtsseitig angeordneten Dichtabschnitt 95 und einen zweiten stromabwärtsseitig zum ersten Dichtabschnitt 95 angeordneten Dichtabschnitt 100 auf. Die Dichtabschnitte 95, 100 sind dabei radial nach innen zueinander versetzt angeordnet, wobei in jeden Dichtabschnitt 95, 100 je ein Dichtelement 90 eingreift. Durch den radialen Versatz der Dichtabschnitte 95, 100 kann die Dichtstruktur 85 an die geometrische Ausgestaltung der Trommel 25 bzw. der Anordnung der Dichtelemente 90 an der Trommel 25 angepasst werden. In Fig. 1 und 2 ist die Anpassung der Dichtabschnitte 95, 100 dahingehend gewählt, dass der erste Dichtabschnitt 95 radial innen liegend zu dem zweiten Dichtabschnitt 100 angeordnet ist. Auch ist denkbar, dass der zweite Dichtabschnitt 100 radial innen zu dem ersten Dichtabschnitt 95 angeordnet ist. Alternativ ist denkbar, dass die beiden Dichtabschnitte 95, 100 radial auf gleicher Höhe angeordnet sind.

Die Ringstruktur 80 umschließt einen Ringinnenraum 105, der in der Ausführungsform vollständig mit einer Hohlkammerstruktur 109, die als Schaumstruktur 110 ausgebildet ist, verfüllt ist. Die Schaumstruktur 110 weist einzelne Zellen bzw. Poren 130 auf. Alternativ ist auch denkbar, dass der Ringinnenraum 105 nur teilweise, vorzugsweise jedoch zu wenigstens 50 %, idealerweise zu wenigstens 80 %, mit der Schaumstruktur 110 verfüllt ist. Dabei ist von Vorteil, dass bei einer nur teilweisen Füllung des Ringinnenraums 105 mit der Schaumstruktur 110 diese vorzugsweise radial außenseitig angeordnet ist.

Die Schaumstruktur 110 weist als Werkstoff einen offenporigen Schaum, vorzugsweise einen offenporigen Metallschaum, auf. Vorteilhafterweise weist die Ringstruktur 105 bzw. die Schaumstruktur 110 wenigstens einen der folgenden Werkstoffe auf: Stahl, Aluminium, Keramik, Titan. Die Schaumstruktur 110 weist ferner eine erste mittlere Porengröße auf. Unter einer mittleren Porengröße wird ein Durchschnittswert der Größe von einzelnen Poren 130 der Schaumstruktur 110 bzw. der Dichtstruktur 85 ermittelt über eine Mehrzahl von Poren 130 verstanden. Die Dichtstruktur 85 weist eine zweite mittlere Porengröße auf, wobei die erste mittlere Porengröße der Schaumstruktur 110 kleiner als die zweite mittlere Porengröße der Dichtstruktur 85 ist. Auf diese Weise wird gewährleistet, dass das Einlaufen der Dichtelemente 90 in der Dichtstruktur 85 reibungsarm erfolgen kann. Ferner wird gleichzeitig durch die kleinere mittlere erste Porengröße der Schaumstruktur 110 gewährleistet, dass die Dichtanordnung 15 durch die Schaumstruktur 110 besonders steif ausgebildet ist.

Die Ringstruktur 80 umschließt die Schaumstruktur 110 im Wesentlichen vollständig und dichtet die Schaumstruktur 110 gegenüber der Umgebung der Dichtanordnung 15, insbesondere gegenüber dem Abgasstrom 20, im Wesentlichen vollständig ab. Um einen Druckausgleich zwischen dem Ringinnenraum105 und der Umgebung der Dichtanordnung 15 zu ermöglichen, weist die Ringstruktur 80 eine erste Durchgangsöffnung 115 auf. Die erste Durchgangsöffnung 115 ist dabei stromabwärtsseitig an einer Seitenfläche 120 der Ringstruktur 80 angeordnet. Die erste Durchgangsöffnung 115 verbindet die Umgebung der Dichtanordnung 15 mit dem Ringinnenraum 105 der Ringstruktur 80. Durch die Betriebsbedingungen wird die Dichtanordnung 15 der Turbine 10 auf bis zu 600° C erwärmt. Durch die offenporige Ausgestaltung der Schaumstruktur 110 können in der Schaumstruktur 110 eingeschlossene Gase zwischen einzelnen Poren 130 der Schaumstruktur 110 ausgetauscht werden bzw. strömen und über die erste Durchgangsöffnung 115 bei einem höheren Druck im Ringinnenraum 105 aus der Ringstruktur 80 heraus. Um das Herausströmen der in den einzelnen Poren 130 eingeschlossenen Gase aus der Ringstruktur 80 zu erleichtern, ist radial außenseitig zu der ersten Durchgangsöffnung 115 eine zweite Durchgangsöffnung 135 vorgesehen. Die zweite Durchgangsöffnung 135 ist dabei an der gleichen Seitenfläche 120 angeordnet wie die erste Durchgangsöffnung 115, um eine Durchströmung der Schaumstruktur 110 durch die Druckdifferenz zwischen dem ersten Druck p₁ und dem zweiten Druck p₂ in axialer Richtung zu vermeiden. Selbstverständlich können die Durchgangsöffnungen 115, 135 auch an einer anderen Seitefläche der Ringstruktur 105 angeordnet sein. Auch kann auf die Durchgangsöffnungen 115, 135 verzichtet werden.

Die Dichtanordnung 15 umfasst ferner an einer äußeren Umfangsfläche 140 eine Aufnahme 145, die gegenüberliegend zu der Dichtstruktur 85 an der Ringstruktur 105 angeordnet ist. Die Aufnahme 145 erstreckt sich dabei im Wesentlichen senkrecht zur Drehachse 30 von der äußeren Umfangsfläche 140 in Richtung der Dichtstruktur 85. Dabei ist die Aufnahme 145 radial nach außen hin geöffnet. In der Ausführungsform sind mehrere Aufnahmen 145 vorgesehen, die in Umfangsrichtung in regelmäßigem Abstand zueinander an der äußeren Umfangsfläche 140 angeordnet sind. Die radiale Erstreckung der Aufnahme 145 ist derart gewählt, dass ein Aufnahmeende 150 der Aufnahme 145 radial beabstandet zu der Dichtstruktur 85 angeordnet ist, so dass zwischen dem Aufnahmeende 150 und der Dichtstruktur 85 sowohl die Ringstruktur 80 als auch die Schaumstruktur 110 angeordnet sind. Auf diese Weise wird gewährleistet, dass ein Druckausgleich auch für die linksseitig der Aufnahme 145 angeordneter Poren 130 der Schaumstruktur 110 über die rechtseitig der Aufnahme 145 angeordneten Durchgangsöffnungen 115, 135 erfolgen kann. Ferner sorgt die Anordnung der Ringstruktur 80 und der Schaumstruktur 110 zwischen dem Aufnahmeende 150 und der Dichtstruktur 85 für eine steife Ausgestaltung der Dichtanordnung 15, so dass vermieden wird, dass im Betrieb der Turbine 10 die Dichtanordnung 15 zu einem ungewollten Schwingen angeregt werden kann. Die Aufnahme 145 umfasst eine linksseitig angeordnete erste Aufnahmefläche 150 und eine rechtsseitig stromabwärtsseitig angeordnete zweite Aufnahmefläche 155, wobei die erste Aufnahmefläche 150 bzw. die zweite Aufnahmefläche 155 im Wesentlichen senkrecht zur Drehachse 30 der Turbine 10 ausgerichtet sind. Selbstverständlich ist auch eine schräge Anordnung der Anlageflächen 150, 155 zu der Drehachse 30 denkbar. Die erste Anlagefläche 150 ist parallel zu der zweiten Anlagefläche 155 ausgebildet. Die Ringstruktur 80 weist radial außenseitig an der äußeren Umfangsfläche 140 einen stromaufwärtsseitigen ersten Überstand 160 und einen stromabwärtsseitig zu dem ersten Überstand 160 angeordneten zweiten Überstand 165 auf. Durch die Überstände 160, 165 wird die Aufnahme 145 radial nach außen hin verlängert und die Anlageflächen 150, 155 vergrößert.

Das Leitrad 50 weist radial innenseitig einen Ring 170 auf, der mehrere Speichen 175 umfasst. Die Speichen 175 sind dabei als Gleitelemente ausgebildet, die an ihren Stirnseiten 180, 185 jeweils an der ihnen zugeordneten Anlagefläche 151, 155 anliegen. Auf diese Weise wird gewährleistet, dass bei einer Erwärmung des Leitschaufelkranzes 60 eine Durchmesseränderung des Rings 170 durch ein Gleiten der Stirnseiten 180, 185 der Speichen 175 an den jeweiligen Anlageflächen 151, 155 der Aufnahme 145 ausgeglichen werden kann. In ihrer Ausgestaltung sind die Speiche 175 und die korrespondierende Aufnahme 145 derartig aneinander angepasst, dass ein Verdrehen der Dichtanordnung 15 an dem Ring 170 vermieden und gleichzeitig eine Führung und Fixierung der Dichtanordnung 15 an dem Ring 170 gewährleistet ist.

Aufgrund des erhöhten ersten Drucks p₁ stromaufwärtsseitig der Dichtanordnung 15 gegenüber dem stromabwärtsseitig rechtsseitig in Fig. 3 vorliegenden zweiten Druck p₂ wird die Dichtanordnung 15 durch die positive Druckdifferenz zwischen dem ersten Druck p₁ und dem zweiten Druck p₂ über die erste Anlagefläche 151 an eine ersten Stirnseite 180 der Speiche 175, die der ersten Anlagefläche 151 zugewandt ist, mit einer Anpresskraft F angepresst. Dabei weist die Ringstruktur 80 an der ersten Anlagefläche 151 eine erste Wandstärke d₁ auf, die größer ist als eine zweite Wandstärke d₂ der Ringstruktur 80 an der zweiten Anlagefläche 155. Die dickere erste Wandstärke d₁ der Ringstruktur 80 wird ferner auch im ersten Überstand 160 fortgeführt, um auch über dem ersten Überstand 160 eine vergrößerte Anpresskraft F auf die Speichen 175 über die erste Anlagefläche 151 einleiten zu können. Die zweite Anlagefläche 155 liegt an einer zweiten Stirnfläche 185 der Speiche 175 an und dient zur Führung der Ringstruktur 80 an dem Ring 170. Auf Grund der an der zweiten Anlagefläche 155 anliegenden geringeren Kräfte kann der zweite Überstand 165 kleiner bzw. filigraner in seiner Ausführung ausgeführt werden als der erste Überstand 160. Diese Ausgestaltung ermöglicht eine gewichtsoptimierte und somit kostenärmere Ausgestaltung der Dichtanordnung 15. Wird die Dichtanordnung 15 anstatt in einer Turbine 10 in einem Verdichter eingesetzt, ist von Vorteil, aufgrund des stromabwärtsseitigen höheren Drucks p₂ gegenüber dem ersten Druck p₁ die zweite Wandstärke d₂ an der zweiten Anlagefläche 155 dicker auszuführen als die erste Wandstärke d₁ an der ersten Anlagefläche 151. Selbstverständlich ist auch denkbar, dass die beiden Wandstärken d₁ und d₂ gleich dick ausgeführt sind.

In der Ausführungsform erstreckt sich die Aufnahme 145 abschnittsweise in Umfangsrichtung. Selbstverständlich ist auch denkbar, dass die Aufnahme 145 vollständig umfangsseitig umlaufend ausgestaltet ist. In der Ausführungsform weist die Ringstruktur 80 einen rechteckförmigen bzw. einen trapezförmigen Querschnitt auf. Selbstverständlich sind auch andere Querschnitte als die in den Figuren 1 bis 3 gezeigten Querschnitte denkbar. Auch wäre denkbar, dass beispielsweise die Ringstruktur 80 einen kreisförmigen oder elliptischen oder polygonförmigen Querschnitt umfasst. Ferner wird darauf hingewiesen, dass die Überstände 160, 165 selbstverständlich radial kürzer oder länger ausgebildet sein können. Auch kann auf die Überstände 160, 165 bei einer hinreichenden Tiefe der Aufnahme 145 in der Dichtanordnung 15 verzichtet werden.

Durch dir oben beschriebene Ausgestaltung der Dichtanordnung 15 und durch die Füllung des Ringinnenraums 105 mit der Schaumstruktur 110 kann ein besonders steife Dichtanordnung 15 bereitgestellt werden. Ferner kann durch die Verfüllung des Ringinnenraums 105 eine Wirbelbildung bzw. eine erhöhte Reibung von Gasen im Ringinnenraum 105 an der Ringstruktur 80 vermieden werden. Dies trifft insbesondere dann zu, wenn der Ringinnenraum 105 vollständig mit dem Schaumstruktur 110 verfüllt ist.

Es wird darauf hingewiesen, dass in den Figuren 1 und 2 die Anwendung des Dichtanordnung 15 in der Turbine 10 in einer dritten Stufe 45 gezeigt ist. Selbstverständlich kann die beschriebene Dichtanordnung 15 auch in den anderen Stufen 35, 40 eingesetzt sein. Die Turbine 10 soll beispielhaft auch für die Anwendung der Dichtanordnung 15 in einem Verdichter der Gasturbine 11 stehen.

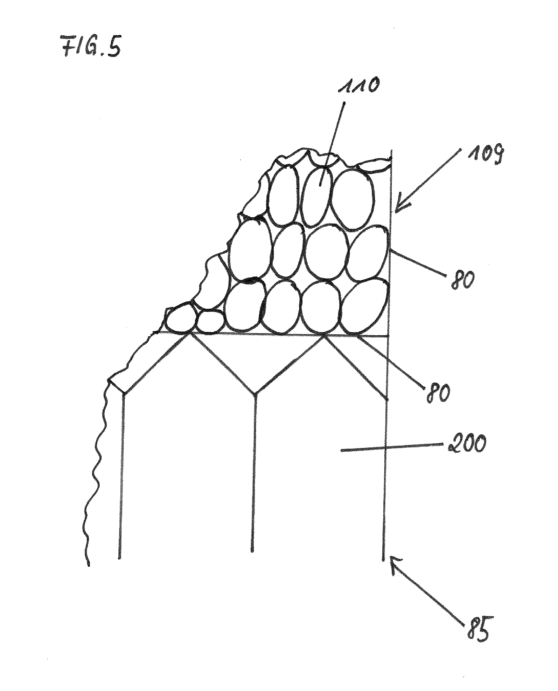

Fig. 5 zeigt einen Längsschnitt durch eine Variante der in Fig. 2 gezeigte Dichtanordnung 15. Die Dichtanordnung 15 ist im Wesentlichen identisch zu der oben erläuterten Dichtanordnung 15. Abweichend dazu ist jedoch die erste mittlere Porengröße der Schaumstruktur 110 größer ist als die mittlere Porengröße der in Fig. 3 gezeigte Schaumstruktur 110. Auf diese Weise kann eine besonders leichte und schnell herstellbare Dichtanordnung 15 bereit gestellt werden.

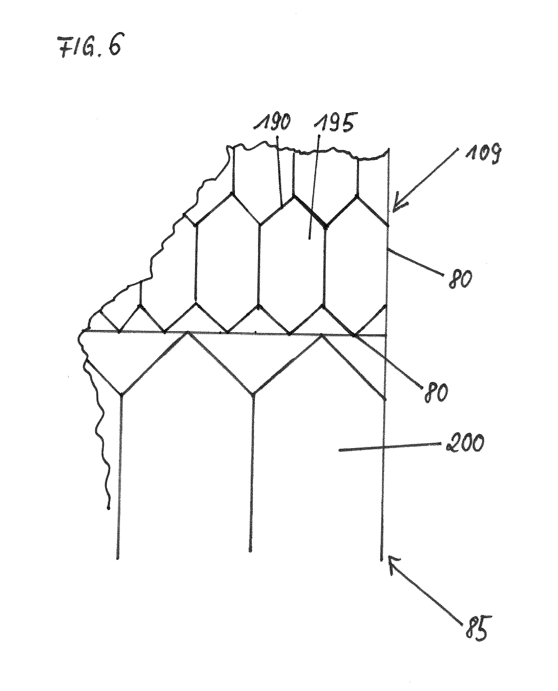

Fig. 6 zeigt einen Längsschnitt durch eine weitere Ausführungsform der in Fig. 2 gezeigten Dichtanordnung 15. Die Dichtanordnung 15 ist im Wesentlichen identisch zu den in den Figuren 1 bis 5 erläuterten Ausgestaltungen, abweichend dazu umfasst die Hohlkammerstruktur 109 eine Tragestruktur 190, die mehrere Waben 195 aufweist. Die Waben 195 sind in der Ausführungsform sechseckig ausgeführt. Selbstverständlich sind auch andere Formen denkbar. In der Ausführungsform erstrecken sich die einzelnen Waben 195 der Tragestruktur 190 radial nach außen hin und weisen somit die gleiche Ausrichtung wie die Waben 200 der Dichtstruktur 85 auf. Selbstverständlich ist auch eine andere Ausrichtung beispielsweise in axialer Richtung denkbar.

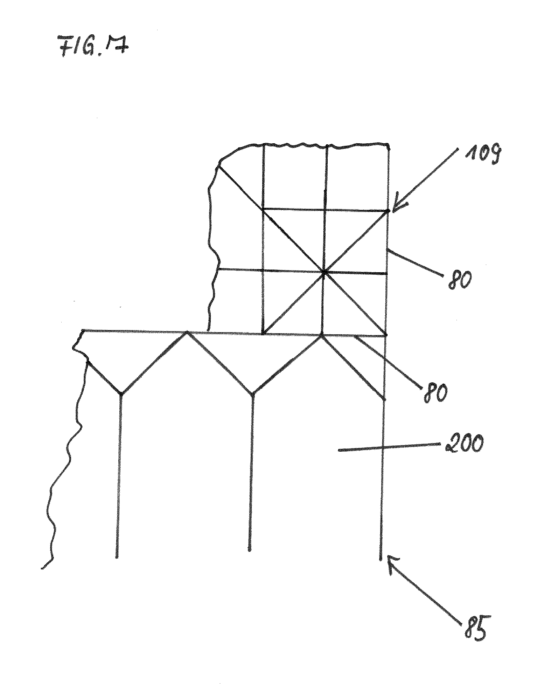

Fig. 7 zeigt einen Längsschnitt durch eine weitere Ausführungsform der in Fig. 2 gezeigten Dichtanordnung 15. Die Dichtanordnung 15 ist im Wesentlichen identisch zu den in den Figuren 1 bis 6 erläuterten Ausgestaltungen, abweichend dazu ist die Tragestruktur 190 fachwerkartig ausgebildet. Die Tragestruktur 190 umfasst dabei eine Vielzahl von Stegen 205. Die Stege 205 sind untereinander an Knotenpunkten 210 miteinander verknüpft. Ferner ist ein Teil der Stege 205, die an die Ringstruktur 80 angrenzen, sowohl mit anderen Stegen 205 als auch mit der Ringstruktur 80 an den Knotenpunkten 205 verknüpft. Dadurch kann eine besonders steife Hohlkammerstruktur 109 bereitgestellt werden.

Es wird darauf hingewiesen, dass die in den Figuren 1 bis 7 gezeigten unterschiedlichen Ausgestaltungen der Hohlkammerstruktur 109 auch miteinander kombiniert werden können, um die Steifigkeit der Dichtanordnung 15 belastungsgerecht anzupassen.

In den gezeigten Ausführungsformen ist die Ringstruktur 80 zwischen der Hohlkammerstruktur 109 und der Dichtstruktur 85 geradlinig ausgeführt. Selbstverständlich ist auch denkbar, dass die Ringstruktur 80 in die Dichtstruktur 85 bzw. Schaumstruktur 110 integriert ist und beispielsweise einem Wandverlauf der Dichtstruktur 85 und/oder der Schaumstruktur 110 folgt und somit beispielsweise gewellt oder teilwabenförmig ausgebildet ist. Auch ist ein kontinuierlicher Übergang von der Hohlkammerstruktur 109 auf die Dichtstruktur 85 denkbar.

Besonders vorteilhaft ist es, wenn die Dichtanordnung 15 mittels eines selektiven Laserschmelzprozesses oder mittels eines selektiven Lasersinterprozesses oder mittels eines Laserpulverauftragsschweißprozesses hergestellt wird. Diese Herstellungsform hat den Vorteil, dass mittels eines Lasers definiert die einzelnen Poren 130 der Schaumstruktur 110 in ihrer Porengröße festgelegt werden können. Auf diese Weise wird eine Streuung hinsichtlich der Porosität bzw. der Größe der Poren 130 vermieden. Auch kann definiert die Ringstruktur 80 besonders dünnwandig ausgestaltet werden, da durch die Anbindung des Materials des Schaumwerkstoffs 110 an die Ringstruktur 80 ein einstückig und materialeinheitlich ausgebildeter Körper bereitgestellt wird, der besonders steif ausgebildet ist und frei von Werkstoffgrenzen ist, so dass ein Abreißen an einer nicht existierenden Werkstoffgrenze zwischen dem Schaumwerkstoff 110 und der Ringstruktur 80 vermieden werden kann.

Ferner kann mittels des genannten Herstellungsverfahrens auf weitere Montageschritte zur Herstellung der Dichtanordnung 15 verzichtet werden. Des Weiteren können aufgrund der definierten Herstellung der einzelnen Poren 130 der Schaumstruktur 110 mittels des selektiven Laserschmelzprozesses oder mittels eines selektiven Lasersinterprozesses oder mittels des Laserpulverauftragsschweißprozesses großvolumige Dichtanordnungen 15 bereitgestellt werden, so dass auch größere Hohlräume radial innenseitig zwischen der Trommel 25 und dem Leitschaufelkranz 60 verfüllt werden können.

Zusätzlich kann durch die großvolumige Ausgestaltung der Dichtanordnung 15 eine verbesserte Abschirmung des radial innen liegenden Bereichs zwischen dem Leitschaufelkranz 60 und der Trommel 25 ermöglicht werden. Auch werden parasitäre Sekundärströmungen weitgehend vermieden. Ferner kann die Dichtanordnung 15 durch den selektiven Laserschmelzverfahren oder selektiven Lasersinterverfahren oder durch das Laserpulverauftragsschweißverfahren belastungsgerecht dimensioniert werden und weitere Fügeelemente wie Schrauben oder Nieten, die fertigungstechnisch bei Hochtemperaturbauteilen einer kritischen Auslegung unterliegen, vermieden werden. Besonders vorteilhaft ist ferner, wenn die Durchgangsöffnungen 115, 135 nicht nur in ihrer Anordnung und Ausgestaltung zum Druckausgleich, sondern auch zur Entfernung von überschüssigem Material aus dem selektiven Laserschmelz- /sinterprozess oder Laserpulverauftragsschweißprozess geeignet sind.

Durch die generative Herstellung der Dichtanordnung 15 mittels einem der oben genannten Verfahren und der oben beschriebenen Ausgestaltung der Dichtanordnung 15 kann die Ringstruktur 80 ferner in ihrer Konturierung frei gestaltet werden und an die Geometrie der an die Dichtanordnung 15 angrenzenden Komponenten frei angepasst werden. Die oben beschriebenen Dichtanordnungen 15 weisen minimale, belastungsgerecht ausgestaltete Wanddicken unter Vermeidung von Doppelungen im Design ohne die Verwendung von Fügestellen auf, so dass eine besonders gewichtsoptimiertes Dichtanordnung 15 bereitgestellt werden kann. Des Weiteren werden die Reibungsverluste durch geringere Kavitäten und glatte Außenwände ermöglicht.

### Bezugszeichenliste

- 10: Turbine
- 11: Gasturbine
- 15: Dichtanordnung
- 20: Abgasstrom
- 25: Trommel
- 30: Drehachse
- 35: erste Stufe
- 40: zweite Stufe
- 45: dritte Stufe
- 50: Leitrad
- 55: Laufrad
- 60: Leitschaufelkranz
- 61: Leitschaufel
- 65: Laufschaufel
- 70: Schaufelfuß
- 75: Spalt
- 80: Ringstruktur
- 85: Dichtstruktur
- 90: Dichtelement
- 95: erster Dichtabschnitt
- 100: zweiter Dichtabschnitt
- 105: Ringinnenraum
- 109: Hohlkammerstruktur
- 110: Schaumstruktur
- 115: erste Durchgangsöffnung
- 120: Seitenfläche
- 130: Poren
- 135: zweite Durchgangsöffnung
- 140: äußere Umfangsfläche
- 145: Aufnahme
- 150: Aufnahmeende
- 151: erste Anlagefläche
- 155: zweite Anlagefläche
- 160: erster Überstand
- 165: zweiter Überstand
- 170: Ring
- 175: Speiche
- 180: erste Stirnseite
- 185: zweite Stirnseite
- 190: Tragestruktur
- 195: Wabe der Tragestruktur
- 200: Wabe der Dichtstruktur
- 205: Steg
- 210: Knotenpunkt
- 215: Fachwerk

## Patentansprüche

1. Dichtanordnung (15) für einen Leitschaufelkranz (60) einer Strömungsmaschine (11),
- wobei die Dichtanordnung (15) eine dünnwandige, weitgehend allseitig geschlossene Ringstruktur (80) umfasst, und
- wobei die Ringstruktur (80) einen Ringinnenraum (105) begrenzt,
**dadurch gekennzeichnet, dass**
- in dem Ringinnenraum (105) eine Hohlkammerstruktur (109) vorgesehen ist, die ausgebildet ist, die Ringstruktur (80) mechanisch zu stützen.

2. Dichtanordnung (15) nach Anspruch 1, **dadurch gekennzeichnet, dass** die Hohlkammerstruktur (109) eine Schaumstruktur (110) umfasst, wobei die Schaumstruktur (110) vorzugsweise einen offenporigen Schaum, insbesondere vorzugsweise einen offenporigen Metallschaum, als Werkstoff umfasst.

3. Dichtanordnung (15) nach Anspruch 1 oder 2, **dadurch gekennzeichnet, dass** die Hohlkammerstruktur (109) eine Tragestruktur (190) umfasst, wobei die Tragestruktur (190) wabenförmig ausgebildet ist.

4. Dichtanordnung (15) nach einem der Ansprüche 1 bis 3, **dadurch gekennzeichnet, dass** die Hohlkammerstruktur (109) wenigstens zwei Stege (205) und wenigstens drei Knotenpunkte (210) umfasst, wobei die Stege (205) an den Knotenpunkten (210) mit der Ringstruktur (80) und/oder die Stege (205) untereinander zu einem Fachwerk (215) verknüpft sind.

5. Dichtanordnung (15) nach einem der Ansprüche 1 bis 4 **dadurch gekennzeichnet, dass** die Ringstruktur (80) mindestens eine Durchgangsöffnung (115, 135) umfasst, die den Ringinnenraum (105) mit einer Umgebung der Dichtanordnung (15) verbindet, wobei die mindestens eine Durchgangsöffnung (115, 135) zum Druckausgleich des Ringinnenraums (105) mit einer Umgebung ausgebildet ist.

6. Dichtanordnung (15) nach Anspruch 5, **dadurch gekennzeichnet, dass** mindestens eine weitere Durchgangsöffnung (135) zum Druckausgleich des Ringinnenraums (105) vorgesehen ist, wobei die Durchgangsöffnung (115) und die weitere Durchgangsöffnung (135) auf der gleichen Seite (120) der Ringstruktur (80) angeordnet sind.

7. Dichtanordnung (15), nach einem der Ansprüche 1 bis 6, **dadurch gekennzeichnet, dass** die Ringstruktur (80) an einer äußeren Umfangsfläche (140) wenigstens eine Aufnahme (145) umfasst, die ausgebildet ist, wenigstens einen Ring (170) des Leitschaufelkranzes (60) aufzunehmen.

8. Dichtanordnung (15) nach Anspruch 7, **dadurch gekennzeichnet, dass** die Aufnahme (145) eine erste stromaufwärtsseitig angeordnete Anlagefläche (151) und eine stromabwärtsseitig angeordnete zweite Anlagefläche (155) umfasst, wobei die Ringstruktur (80) an der ersten Anlagefläche (151) eine erste Wandstärke (d₁) und an der zweiten Anlagefläche (155) eine zweite Wandstärke (d₂) aufweist, wobei die erste Wandstärke (d₁) von der zweiten Wandstärke (d₂) abweicht.

9. Dichtanordnung (15), nach einem der Ansprüche 1 bis 8, **dadurch gekennzeichnet, dass** radial innen liegend an der Ringstruktur (80) eine Dichtstruktur (85) vorgesehen ist, die vorzugsweise wabenförmig oder schaumartig ausgebildet ist, wobei die Hohlkammerstruktur (110) eine erste mittlere Porengröße und die Dichtstruktur (85) eine zweite mittlere Porengröße umfasst, wobei die erste mittlere Porengröße der Hohlkammerstruktur (110) kleiner als die zweite mittlere Porengröße der Dichtstruktur (85) ist.

10. Dichtanordnung (15) nach einem der Ansprüche 1 bis 9, **dadurch gekennzeichnet, dass** die Ringstruktur (80) und die Hohlkammerstruktur (110) und vorzugsweise die Dichtstruktur (85) einstückig und materialeinheitlich ausgebildet sind.

11. Dichtanordnung (15) nach einem der Ansprüche 1 bis 10, **dadurch gekennzeichnet, dass** die Ringstruktur (80) und die Hohlkammerstruktur (109, 110) und vorteilhafterweise auch die Dichtstruktur (85) mittels eines Laserpulverauftragsschweissprozesses oder mittels eines selektiven Laserschmelzprozesses oder mittels eines selektiven Lasersinterprozesses gemeinsam hergestellt sind.

12. Dichtanordnung (15) nach einem der Ansprüche 1 bis 11, **dadurch gekennzeichnet, dass** die Hohlkammerstruktur (110) und die Ringstruktur (80) einen im Wesentlichen identischen Werkstoff aufweisen, wobei der Werkstoff wenigstens einen der folgenden Bestandteile umfasst: Stahl, Aluminium, Keramik, Titan, Nickel, Kobalt.

13. Leitschaufelanordnung mit einem Leitschaufelkranz (60) und einer Dichtanordnung (15), wobei die Dichtanordnung (15) radial innenseitig an dem Leitschaufelkranz (60) angeordnet ist, **dadurch gekennzeichnet, dass** die Dichtanordnung (15) nach einem der Ansprüche 1 bis 12 ausgebildet ist.

14. Strömungsmaschine (10, 11) aufweisend wenigstens ein drehbar angeordnetes Laufrad (55) und wenigstens ein Leitrad (50), wobei das Laufrad (55) wenigstens eine Laufschaufel (65) und das Leitrad (50) wenigstens einen Leitschaufelkranz (60) umfasst, wobei der wenigstens einen Laufschaufel (65) der wenigstens eine Leitschaufelkranz (60) zugeordnet ist, und wobei an dem wenigstens einen Leitschaufelkranz (60) radial außenseitig und/oder innenseitig wenigstens eine Dichtanordnung (15) vorgesehen ist, **dadurch gekennzeichnet, dass** die Dichtanordnung (15) nach einem der Ansprüche 1 bis 12 ausgebildet ist.
